# EUROPEAN PATENT APPLICATION

(11) **EP 4 329 215 A1**
(43) Date of publication of application: **28.02.2024**
(21) Application number: 23190317.0
(22) Date of filing: 08.08.2023
(51) Int. Cl.: H04B 7/155, H04B 7/06, H04W 52/46

(54) **METHOD AND APPARATUS FOR CONFIGURING CONTROL INFORMATION FOR A NETWORK-CONTROLLED REPEATER**

(30) Priority: 12.08.2022 US 202263371235 P; 03.07.2023 US 202318217714
(71) Applicant: MediaTek Inc., 30078 Hsinchu City (TW)
(72) Inventor: FANG, Chun-Hao, Hsinchu City (TW); TSAI, Cheng-Rung, Hsinchu City (TW); TSAI, Lung-Sheng, Hsinchu City (TW)
(74) Representative: Patentship Patentanwaltsgesellschaft mbH

(57) **Abstract**

Examples pertaining to transmission of at least one of beam indication information, on-off information and power control information in one control information for a repeater (120) are described. A repeater (120) receives a configuration indicating a control information from a network node (110) of a wireless network (100). In response, the repeater (120) determines an activation of forwarding a signal to a user equipment (130) or to the network node (110). The control information includes at least one of the beam indication information, the on-off information and the power control information.

## Description

### TECHNICAL FIELD

The present disclosure is generally related to mobile communications and, more particularly, to a transmission of at least one of beam indication information, on-off information and power control information in one control information for a repeater.

### BACKGROUND

Unless otherwise indicated herein, approaches described in this section are not prior art to the claims listed below and are not admitted as prior art by inclusion in this section.

In conventional network of 3rd Generation Partnership Project (3GPP) 5G New Radio (NR), for enhancing the coverage of NR network communication, a repeater may be introduced in the NR network. In particular, the repeater with compatibility of legacy user equipment and lower cost of deployment may be deployed in the NR network for forwarding information from a base station (BS) to a user equipment (UE) or forwarding information from a UE to a BS. Specifically, the BS may control an activation of the repeater (e.g., switching from an off state to an on state) via a control information, and the repeater may correspondingly forward radio frequency (RF) signal(s) to the UE after activating. Based on applicable functions of the NR network, the BS may configure a plurality of control information to the repeater by different and separate configurations. However, in order to configure those different and separate configurations, more scheduling for signaling/channels/resources between the BS and the repeater may be required for the network with less flexibility and efficiency. Therefore, there is a need for configuring control information for the repeater.

### SUMMARY

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

One objective of the present disclosure is propose schemes, concepts, designs, systems, methods and apparatus pertaining to a transmission of at least one of beam indication information, on-off information and power control information in one control information for the repeater. It is believed that the above-described issue would be avoided or otherwise alleviated by implementing one or more of the proposed schemes described herein.

In one aspect, a method may involve a processor of a repeater receiving a configuration indicating a control information from a network node of a wireless network. In response, the method may also involve the processor determining an activation of forwarding a signal to a UE or to the network node based on the control information. The control information may include at least one of beam indication information, on-off information and power control information.

In another aspect, an apparatus implementable in a repeater may include a transceiver and a processor coupled to the transceiver. The transceiver may be configured to communicate wirelessly. The processor may receive, via the transceiver, a configuration indicating a control information from a network node of a wireless network. In response, the processor may determine an activation of forwarding a signal to a UE or to the network node based on the control information. The control information may include at least one of beam indication information, on-off information and power control information.

In still another aspect, a method may involve a processor of a network node configuring a configuration indicating a control information to a repeater of a wireless network. The control information may include at least one of beam indication information, on-off information and power control information. The control information may be used to determine an activation of forwarding a signal to a UE or to the network node.

More specifically, a first aspect of the invention relates to a method, comprising: receiving, by a processor of a repeater, a configuration indicating a control information from a network node of a wireless network; and determining, by the processor, an activation of forwarding a signal to a user equipment (UE) or to the network node based on the control information, wherein the control information comprises at least one of beam indication information, on-off information and power control information.

In a first embodiment of the first aspect, the method further comprises: receiving, by the processor, an indication indicating a slot offset and a duration of the activation of forwarding the signal to the UE or to the network node. In a second embodiment of the first aspect, in an event that the control information is the beam indication information, the method further comprises: obtaining, by the processor, the on-off information configured in the beam indication information; and determining, by the processor, whether to activate the repeater for forwarding the signal to the UE or to the network node based on the on-off information. In a third embodiment of the first aspect in combination with the second embodiment of the first aspect, the method further comprises: obtaining, by the processor, the power control information configured in the beam indication information; determining, by the processor, a specific beam for the signal based on a beam identification (ID) of the beam indication information; and determining, by the processor, a transmission power of the signal based on the power control information. In a fourth embodiment of the first aspect in combination with the second embodiment of the first aspect, the beam indication information comprises a table configuring a plurality of beam IDs and a plurality of power control information during a plurality of slots. In a fifth embodiment of the first aspect in combination with the second embodiment of the first aspect, the repeater is inactive before receiving the on-off information for activating the repeater, or the repeater is turned off in response of receiving an off command. In a sixth embodiment of the first aspect in combination with the second embodiment of the first aspect, the method further comprises: receiving, by the processor, the beam indication information periodically.

A second aspect of the invention relates to an apparatus implementable in a repeater, comprising: a transceiver configured to communicate wirelessly; and a processor coupled to the transceiver and configured to perform operations comprising: receiving, via the transceiver, a configuration indicating a control information from a network node of a wireless network; and determining an activation of forwarding a signal to a user equipment (UE) or to the network node based on the control information, wherein the control information comprises at least one of beam indication information, on-off information and power control information.

In a first embodiment of the second aspect, the processor is further configured to perform operations comprising: receiving, via the transceiver, an indication indicating a slot offset and a duration of the activation of forwarding the signal to the UE or to the network node. In a second embodiment of the second aspect, in an event that the control information is the beam indication information, the processor is further configured to perform operations comprising: obtaining the on-off information configured in the beam indication information; and determining whether to activate the repeater for forwarding the signal to the UE or to the network node based on the on-off information. In a third embodiment of the second aspect in combination with the second embodiment of the second aspect, wherein the processor is further configured to perform operations comprising: obtaining the power control information configured in the beam indication information; and determining a specific beam for the signal based on a beam identification (ID) of the beam indication information; and determining a transmission power of the signal based on the power control information. In a fourth embodiment of the second aspect in combination with the second embodiment of the second aspect, the beam indication information comprises a table configuring a plurality of beam IDs and a plurality of power control information during a plurality of slots. In a fifth embodiment of the second aspect in combination with the second embodiment of the second aspect, the repeater is inactive before receiving the on-off information for activating the repeater, or the repeater is turned off in response of receiving an off command. In a sixth embodiment of the second aspect in combination with the second embodiment of the second aspect, the processor is further configured to perform operations comprising: receiving, via the transceiver, the beam indication information periodically.

A third aspect of the invention relates to a method, comprising: configuring, by a processor of a network node, a configuration indicating a control information to a repeater of a wireless network, wherein the control information comprises at least one of beam indication information, on-off information and power control information, and wherein the control information is used to determine an activation of forwarding a signal to a user equipment (UE) or to the network node.

It is noteworthy that, although description provided herein may be in the context of certain radio access technologies, networks and network topologies such as 5^{th} Generation System (5GS) and 4G EPS mobile networking, the proposed concepts, schemes and any variation(s)/derivative(s) thereof may be implemented in, for and by other types of wireless and wired communication technologies, networks and network topologies such as, for example and without limitation, Ethernet, Universal Terrestrial Radio Access Network (UTRAN), E-UTRAN, Global System for Mobile communications (GSM), General Packet Radio Service (GPRS)/Enhanced Data rates for Global Evolution (EDGE) Radio Access Network (GERAN), Long-Term Evolution (LTE), LTE-Advanced, LTE-Advanced Pro, IoT, Industrial loT (IIoT), Narrow Band Internet of Things (NB-IoT), and any future-developed networking technologies. Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation in order to clearly illustrate the concept of the present disclosure.
FIG. 1 is a diagram of an example network scheme in accordance an implementation of the present disclosure.
FIG. 2A is a diagram of a proposed scheme for a repeater in accordance an implementation of the present disclosure.
FIG. 2B is a diagram of another proposed scheme for a repeater in accordance an implementation of the present disclosure.
FIG. 3 is a diagram of another proposed scheme for a repeater in time domain in accordance an implementation of the present disclosure.
FIG. 4 is a diagram of a proposed table of a beam indication information configured to the repeater in accordance an implementation of the present disclosure.
FIG. 5 is a diagram of another proposed scheme for a repeater in time domain in accordance an implementation of the present disclosure.
FIG. 6 is a diagram of another proposed scheme for a repeater in time domain in accordance an implementation of the present disclosure.
FIG. 7 is a diagram of another proposed scheme for a repeater in accordance an implementation of the present disclosure.
FIG. 8 is a diagram of another proposed table of an on-off information configured to the repeater in accordance an implementation of the present disclosure.
FIG. 9 illustrates an example communication system having at least an example communication apparatus and an example network apparatus in accordance with an implementation of the present disclosure.
FIG. 10 illustrates an example process in accordance with an implementation of the present disclosure.
FIG. 11 illustrates another example process in accordance with an implementation of the present disclosure.

### DETAILED DESCRIPTION OF PREFERRED IMPLEMENTATIONS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes and/or solutions pertaining to a transmission of at least one of beam indication information, on-off information and power control information in one control information for the repeater. According to the present disclosure, a number of possible solutions may be implemented separately or jointly. That is, although these possible solutions may be described below separately, two or more of these possible solutions may be implemented in one combination or another.

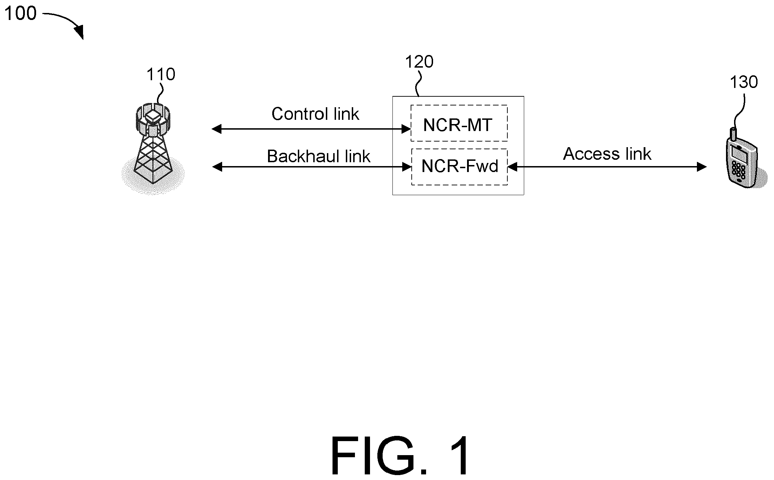

FIG. 1 is a diagram of an example network scheme 100 in accordance an implementation of the present disclosure. In some implementations, the network scheme 100 may include at least a BS 110 (e.g., eNB, gNB and/or transmission/reception point (TRP)), a repeater 120 (e.g., a network-controlled repeater, NCR) and a UE 130. Specifically, the repeater 120 may include an NCR-Mobile termination (NCR-MT) entity that communicates with the BS 110 via a control link and an NCR-Forwarding (NCR-Fwd) entity that performs amplifying-and-forwarding operations for an uplink/downlink (UL/DL) RF signal(s) between the BS 110 and the UE 130 via a backhaul link and an access link, respectively. By using the control link, the BS 110 may transmit a control information to the repeater 120 to adaptively control whether to (de)activate the repeater 120 (e.g., switching between an on state and an off state of the repeater) for following operations with the UE 130. After being activated, the repeater 120 may correspondingly amplify and/or forward the RF signal(s) to the UE 130 via the access link. In addition, the repeater 110 may adaptively return feedback to the BS 110 after receiving information/reports from the UE 130.

Since more applicable functions may be implemented in the NR network, the BS 110 may configure more separate control information, including, but not limiting to, beam indication information, on-off information and power control information to the repeater 120 by different configurations/resources. However, by using more separate control information, the network may require to (pre-)configure more scheduling signal/channels between the BS 110 and the repeater 120, which will be less flexible and efficient for the network. As that, it is proposed to apply one control information, which may include at least one of the beam indication information, the on-off information and the power control information, to be transmitted from the BS 110 to the repeater 120 via the control link, as described below. It is noteworthy that, while the various proposed schemes may be individually or separately described below, in actual implementations each of the proposed schemes may be utilized individually or separately. Alternatively, some or all of the proposed schemes may be utilized jointly.

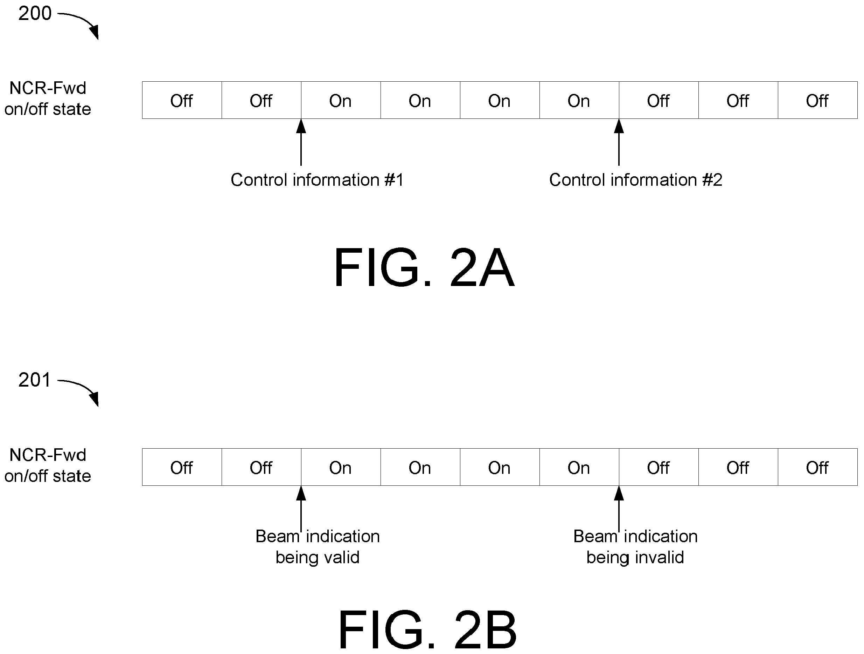

FIG. 2A is a diagram of a proposed scheme 200 for a repeater in accordance an implementation of the present disclosure. As shown in FIG. 2A, the repeater may be illustrated as an activation of an NCR-Fwd (e.g., being `On' or 'Off' in fields of NCR-Fwd on/off state). Specifically, the BS may configure a configuration to the repeater, and the NCR-MT of the repeater may receive a control information based on the configuration, so as to adaptively (de)activate the NCR-Fwd of the repeater. The control information may explicitly indicate at least one of the beam indication information, the on-off information and the power control information. Alternatively, the control information may explicitly indicate one of the beam indication information, the on-off information and the power control information, and then implicitly indicate one or more other functional information in the previously explicit functional information.

For example, the control information may be the beam indication information, and further indicate the on-off information in the beam indication information (i.e., implicitly indicating the on-off information in the explicit beam indication information). In another example, the control information may be the beam indication information, and further indicate the on-off information as well as the power control information in the beam indication information (i.e., implicitly indicating the on-off information as well as the power control information in the explicit beam indication information). In other words, the BS may adaptively configure one or more functional information (e.g., the beam indication information, the on-off information and the power control information) within single control information to the repeater, so as to effectively reduce additional scheduling and/or resources for configuring more than one control information of the network.

In some implementations, based on transmission of single control information from the BS to the repeater, the above functional information may maintain similar functions and/or mechanisms after combining/multiplexing for transmission. Specifically, the on-off information may indicate an on command to turn on or activate the repeater (e.g., switching from the off state to the on state) or an off command to turn off or deactivate the repeater (e.g., switching from the on state to the off state). In addition, the beam indication information may indicate a beam identification (ID) that is used to transmit the signal(s) in one spatial direction. Further, the power control information may indicate a transmission power of the signal(s) along with the configured spatial direction.

As shown in FIG. 2A, the control information may be the beam indication information to further implicitly indicate the on-off information and/or the power control information therein, which is not limiting the scope of the disclosure. Specifically, the NCR-Fwd of the repeater may receive the control information #1 that explicitly indicates the beam indication information and implicitly indicates an on command of the on-off information and/or the power control information. Next, the NCR-Fwd may be correspondingly activated based on the on command, and further apply the beam ID of the beam indication information and/or the transmission power of the power control information for forwarding signal(s) to the UE or to the BS. During an activation/operation of forwarding the signal(s), if the NCR-Fwd of the repeater receives the control information #2 that indicates the off command, the NCR-Fwd may be deactivated to stop forwarding signal(s) to the UE or to the BS, where the beam indication information and/or the power control information may be adaptively neglected/deleted/disregarded in the control information #2.

FIG. 2B is a diagram of another proposed scheme 201 for a repeater in accordance an implementation of the present disclosure. Similar to the proposed scheme 200 shown in FIG. 2A, the control information in FIG. 2B is the beam indication information that may include beam indication being valid and beam indication being invalid. Specifically, the NCR-Fwd of the repeater may receive the beam indication being valid to explicitly indicate the beam indication information and implicitly indicate an on command of the on-off information. Next, the NCR-Fwd may be correspondingly activated based on the on command, and further apply the beam ID of the beam indication information for forwarding signal(s) to the UE or to the BS. During an activation/operation of forwarding the signal(s), if the NCR-Fwd of the repeater receives the beam indication being invalid to indicate the off command, the NCR-Fwd may be deactivated to stop forwarding signal(s) to the UE or to the BS.

In some implementation, the BS may further configure one indication to the repeater. Specifically, the indication may indicate at least a slot offset and a duration. The slot offset may indicate a number of slots for which the on-off information and the beam indication information will be valid/effective after the repeater receives the control information. The duration may indicate a valid period for applying the beam indication information. For example, if the slot offset is n and the on command of the on-off information is received at slot #k, the NCR-Fwd will be turned on/activated (i.e., switched from the off state to the on state) at slot #k+n. If the duration is m, the activation of the NCR-Fwd applying the beam indication information will be valid for a period of m slots (e.g., from slot #k to slot #k+m).

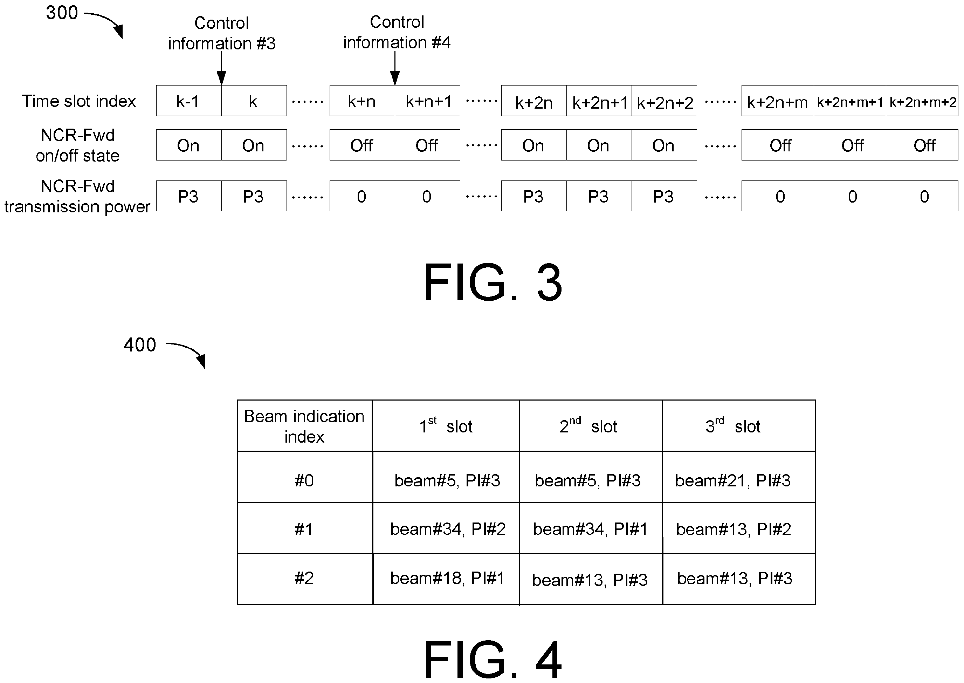

FIG. 3 is a diagram of another proposed scheme 300 for a repeater in time domain in accordance an implementation of the present disclosure. FIG. 4 is a diagram of a proposed table 400 of a beam indication information configured to the repeater in accordance an implementation of the present disclosure. As shown in FIG. 3, the repeater may also be illustrated as operations of an NCR-Fwd (e.g., an on/off state as well as transmission power of the NCR-Fwd) in time domain, and the control information, similar to the one illustrated in FIG. 2A, may be the beam indication information that may further implicitly indicate the on-off information and the power control information. In addition, the beam indication information may be applied with the table 400 that configures a plurality of beam ID indexes (e.g., #0, #1, #2) in rows and a plurality of slots (e.g., 1^{st} slot, 2^{nd} slot, 3^{rd} slot..., etc.) in columns. Based on different slots in column, each beam ID index may be an element indicating a set/combination of one beam ID and one transmission power. As that, the NCR-Fwd may be configured with different elements of the table 400 to correspondingly apply one beam ID and one transmission power for forwarding the signal(s) to the UE or to the BS. For example, if the beam indication index is #1, the beam ID is beam#34 and the transmission power is PI#2 at 1^{st} slot, the beam ID is beam#34 and the transmission power is PI#1 at 2^{nd} slot, and the beam ID is beam#13 and the transmission power is PI#2 at 3^{rd} slot, respectively.

As shown in FIG. 3 and FIG. 4, the repeater may be activated before explicitly receiving an off command of the control information. At slot k, the NCR-MT of the repeater may receive the control information #3 that explicitly indicates the off command, and accordingly, the NCR-Fwd of the repeater may be deactivated at slot #k+n. Next, the NCR-MT of the repeater may receive the control information #4 that explicitly indicates the beam indication information being the beam identification index #0 and implicitly indicates the on command of the on-off information as well as the power control information via the beam indication information. For example, based on the beam identification index #0, the NCR-Fwd of the repeater may be configured a pair of (on command, power control information) as (beam#5, PI#3) at 1^{st} slot, (beam#5, PI#3) at 2^{nd} slot, and (beam#21, PI#3) at 3^{rd} slot, respectively. Sharing the same slot offset being n and the duration being m, the NCR-Fwd of the repeater may be activated for m slots (i.e., being 'On' for a number of m slots in fields of NCR-Fwd on-off state) with designated transmission power (i.e., being `P3' in fields of NCR-Fwd transmission power) for forwarding the signals to the UE or to the BS, and be deactivated at slot #k+2n+m (i.e., being 'Off' in fields of NCR-Fwd on-off state and '0' in fields of NCR-Fwd transmission power).

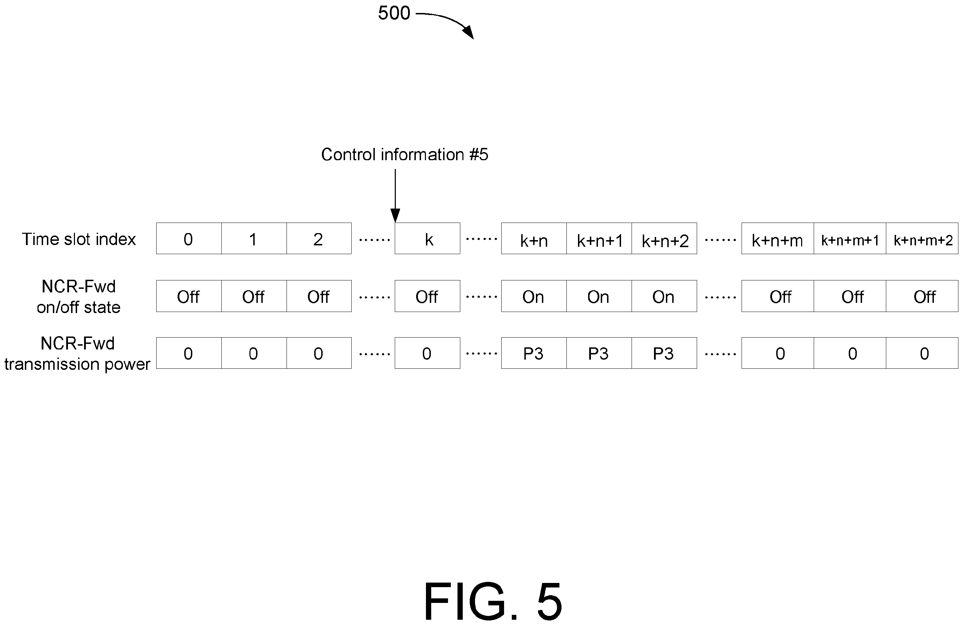

FIG. 5 is a diagram of another proposed scheme 500 for a repeater in time domain in accordance an implementation of the present disclosure. As shown in FIG. 5, the operations, control information and table configured for the beam indication information may be similar to those introduced in FIG. 3 and FIG. 4, and the only difference is that the repeater in FIG. 5 may be always deactivated. Until receiving the control information explicitly indicating on command from the BS, the repeater may be activated, where the control information may be the explicit beam indication information that implicitly indicates the on-off information as well as the power information, as shown in FIG.3. Specifically, before receiving the control information #5, the repeated is in the off state (i.e., being 'Off' in fields of NCR-Fwd on-off state and '0' in fields of NCR-Fwd transmission power). At slot #k, the NCR-MT of the repeater may receive the control information #5 that explicitly indicates the beam indication information being the beam ID index #0 shown in FIG. 4 and implicitly indicates the on command of the on-off information as well as the power control information via the beam indication information. As that, the NCR-Fwd of the repeater may be activated for m slots (i.e., being 'On' for a number of m slots in fields of NCR-Fwd on-off state) with designated transmission power (i.e., being `P3' in fields of NCR-Fwd transmission power), to correspondingly forward the signals to the UE or to the BS until slot # k+n+m.

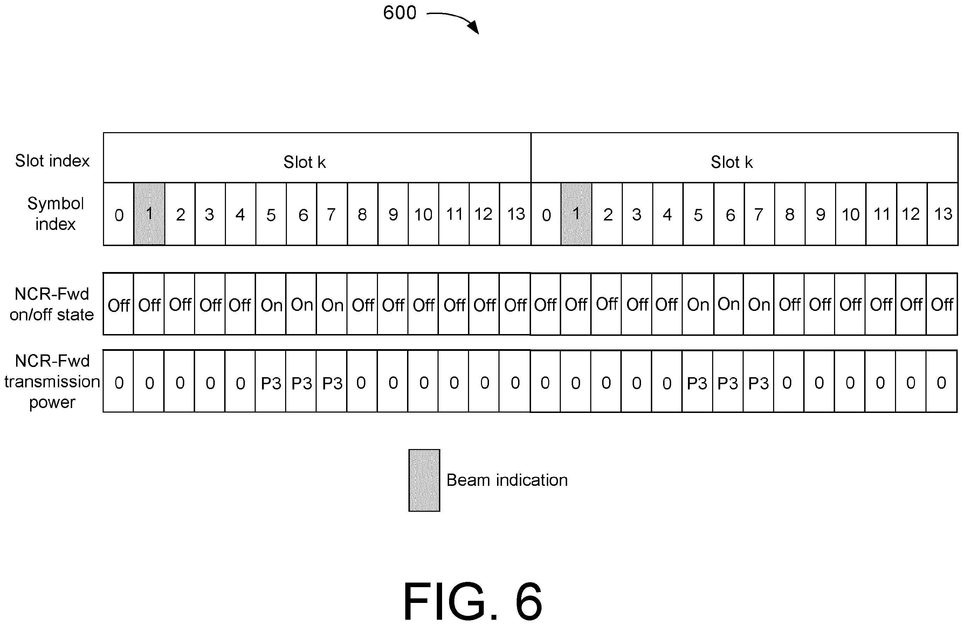

FIG. 6 is a diagram of another proposed scheme 600 for a repeater in time domain in accordance an implementation of the present disclosure. As shown in FIG. 6, the BS may periodically configure the control information to the repeater, and the control information may explicitly indicate the beam indication information that may further implicitly indicate the on-off information as well as the power control information. In addition, the bean indication information may be effective for 4 symbols, and the duration of the beam indication information may be effective for 3 symbols. Specifically, after the NCR-MT of the repeater periodically receives the control information (e.g., receiving at symbol #1 of slot k or slot k+1), the NCR-Fwd may be correspondingly activated/turned on at symbol #5 to symbol #7 of slot k/ slot k+1. Further, the NCR-Fwd may apply the table 400 shown in FIG. 4 to correspondingly forward the signal(s) to the UE or to the BS (e.g., applying PI #3 for forwarding the signal(s) to the UE or to the BS at symbol #5 to symbol #7 of slot k/slot k+1).

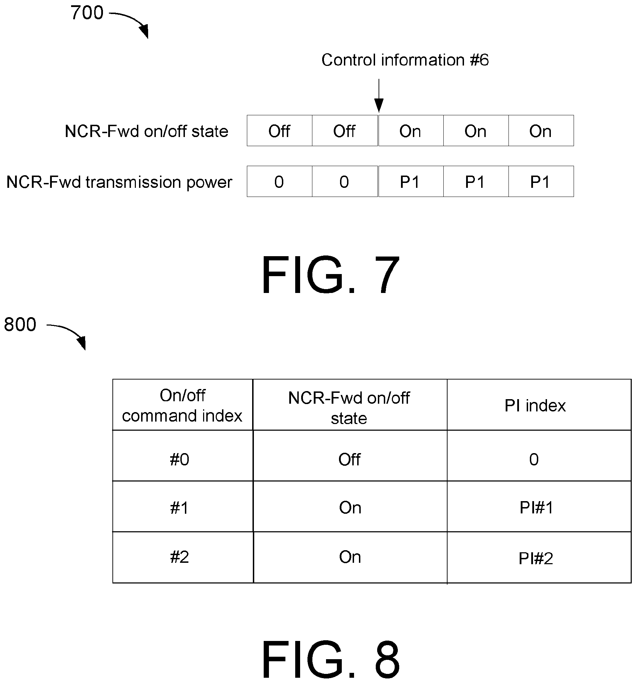

FIG. 7 is a diagram of another proposed scheme 700 for a repeater in accordance an implementation of the present disclosure. FIG. 8 is a diagram of another proposed table 800 of an on-off information configured to the repeater in accordance an implementation of the present disclosure. As shown in FIG. 7, the BS may explicitly configure the on-off information as the control information via a radio resource control (RRC) message or a downlink control information (DCI). In addition, the on-off information may implicitly indicate the power control information based on the table 800. Specifically, the table 800 may include a plurality of on-off command indexes to correspondingly mapping the NCR-Fwd on/off state of the repeater as well as the PI index of the power control information for forwarding the signal(s) to the UE or to the BS. For example, after the NCR-MT of the repeater receives the control information #6 that explicitly indicates the on-off command index #1, the NCR-Fwd of the repeater may be activated on and switched from the off state to the on state (i.e., being 'On' in fields of NCR-Fwd on/off state). Besides, the NCR-Fwd of the repeater may correspondingly apply PI#1 as the transmission power for forwarding the signal(s) to the UE or to the BS.

Since the above proposed schemes may explicitly/implicitly configure at least one of the beam indication information, on-off information and the power control information in the control information that is transmitted from the BS to the repeater, the network may be flexible and efficient without (pre-)configuring much more scheduling signal/channels/resources between the BS 110 and the repeater 120. In addition, considering different scenarios/schemes, it is adjustable to have only two functional information, rather than all functional information, be jointly transmitted in single control information with a smaller payload size/table. Thus, an adaptive controlling mechanism for activating the repeater is proposed.

### Illustrative Implementations

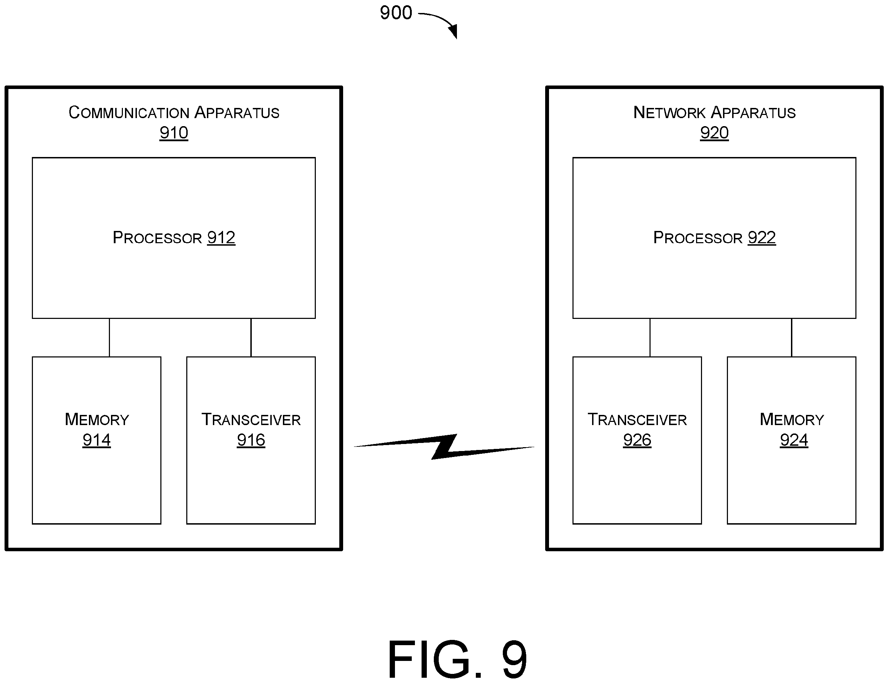

FIG. 9 illustrates an example communication system 900 having at least an example communication apparatus 910 and an example network apparatus 920 in accordance with an implementation of the present disclosure. Each of apparatus 910 and apparatus 920 may perform various functions to implement schemes, techniques, processes and methods described herein pertaining to a transmission of at least one of beam indication information, on-off information and power control information in one control information for a repeater, including the various schemes described above with respect to various proposed designs, concepts, schemes, systems and methods described above, including network scheme 100, as well as processes described below.

Each of apparatus 910 and apparatus 920 may be a part of an electronic apparatus, which may be a network apparatus or a UE (e.g., UE 130), such as a portable or mobile apparatus, a wearable apparatus, a vehicular device or a vehicle, a wireless communication apparatus or a computing apparatus. For instance, each of apparatus 910 and apparatus 920 may be implemented in a smartphone, a smart watch, a personal digital assistant, an electronic control unit (ECU) in a vehicle, a digital camera, or a computing equipment such as a tablet computer, a laptop computer or a notebook computer. Each of apparatus 910 and apparatus 920 may also be a part of a machine type apparatus, which may be an loT apparatus such as an immobile or a stationary apparatus, a home apparatus, a roadside unit (RSU), a wire communication apparatus or a computing apparatus. For instance, each of apparatus 910 and apparatus 920 may be implemented in a smart thermostat, a smart fridge, a smart door lock, a wireless speaker or a home control center. When implemented in or as a network apparatus, apparatus 910 and/or apparatus 920 may be implemented in an eNodeB in an LTE, LTE-Advanced or LTE-Advanced Pro network or in a gNB, a repeater (e.g., NCR) or TRP in a 5G network, an NR network or an loT network.

In some implementations, each of apparatus 910 and apparatus 920 may be implemented in the form of one or more integrated-circuit (IC) chips such as, for example and without limitation, one or more single-core processors, one or more multi-core processors, one or more complex-instruction-set-computing (CISC) processors, or one or more reduced-instruction-set-computing (RISC) processors. In the various schemes described above, each of apparatus 910 and apparatus 920 may be implemented in or as a network apparatus or a UE. Each of apparatus 910 and apparatus 920 may include at least some of those components shown in FIG. 9 such as a processor 912 and a processor 922, respectively, for example. Each of apparatus 910 and apparatus 920 may further include one or more other components not pertinent to the proposed scheme of the present disclosure (e.g., internal power supply, display device and/or user interface device), and, thus, such component(s) of apparatus 910 and apparatus 920 are neither shown in FIG. 9 nor described below in the interest of simplicity and brevity.

In one aspect, each of processor 912 and processor 922 may be implemented in the form of one or more single-core processors, one or more multi-core processors, or one or more CISC or RISC processors. That is, even though a singular term "a processor" is used herein to refer to processor 912 and processor 922, each of processor 912 and processor 922 may include multiple processors in some implementations and a single processor in other implementations in accordance with the present disclosure. In another aspect, each of processor 912 and processor 922 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 912 and processor 922 is a special-purpose machine specifically designed, arranged and configured to perform specific tasks including those pertaining to a transmission of at least one of beam indication information, on-off information and power control information in one control information for a repeater in accordance with various implementations of the present disclosure.

In some implementations, apparatus 910 may also include a transceiver 916 coupled to processor 912. Transceiver 916 may be capable of wirelessly transmitting and receiving data. In some implementations, transceiver 916 may be capable of wirelessly communicating with different types of wireless networks of different radio access technologies (RATs). In some implementations, transceiver 916 may be equipped with a plurality of antenna ports (not shown) such as, for example, four antenna ports. That is, transceiver 916 may be equipped with multiple transmit antennas and multiple receive antennas for multiple-input multiple-output (MIMO) wireless communications. In some implementations, apparatus 920 may also include a transceiver 926 coupled to processor 922. Transceiver 926 may include a transceiver capable of wirelessly transmitting and receiving data. In some implementations, transceiver 926 may be capable of wirelessly communicating with different types of UEs/wireless networks of different RATs. In some implementations, transceiver 926 may be equipped with a plurality of antenna ports (not shown) such as, for example, four antenna ports. That is, transceiver 926 may be equipped with multiple transmit antennas and multiple receive antennas for MIMO wireless communications.

In some implementations, apparatus 910 may further include a memory 914 coupled to processor 912 and capable of being accessed by processor 912 and storing data therein. In some implementations, apparatus 920 may further include a memory 924 coupled to processor 922 and capable of being accessed by processor 922 and storing data therein. Each of memory 914 and memory 924 may include a type of random-access memory (RAM) such as dynamic RAM (DRAM), static RAM (SRAM), thyristor RAM (T-RAM) and/or zero-capacitor RAM (Z-RAM). Alternatively, or additionally, each of memory 914 and memory 924 may include a type of read-only memory (ROM) such as mask ROM, programmable ROM (PROM), erasable programmable ROM (EPROM) and/or electrically erasable programmable ROM (EEPROM). Alternatively, or additionally, each of memory 914 and memory 924 may include a type of nonvolatile random-access memory (NVRAM) such as flash memory, solid-state memory, ferroelectric RAM (FeRAM), magnetoresistive RAM (MRAM) and/or phase-change memory. Alternatively, or additionally, each of memory 914 and memory 924 may include a UICC.

Each of apparatus 910 and apparatus 920 may be a communication entity capable of communicating with each other using various proposed schemes in accordance with the present disclosure. For illustrative purposes and without limitation, a description of capabilities of apparatus 910, as a UE (e.g., UE 130) and/or a repeater (e.g., repeater 120), and apparatus 920, as a network node (e.g., BS 110) of a wireless network, is provided below.

Under certain proposed schemes in accordance with the present disclosure with respect to transmission of at least one of beam indication information, on-off information and power control information in one control information for a repeater in mobile communications, processor 912 of apparatus 910, implemented in or as repeater 120, may receiving, via transceiver 916, a configuration indicating a control information from a network node (e.g., BS 110) of a wireless network. Additionally, processor 912 may determine an activation of forwarding a signal to a UE (e.g., UE 130) or to the BS (e.g., BS 110) based on the control information. The control information includes at least one of beam indication information, on-off information and power control information.

In some implementations, processor 912 may receive, via transceiver 916, an indication indicating a slot offset and a duration of the activation of forwarding the signal to the UE (e.g., UE 130) or to the BS (e.g., BS 110).

In some implementations, in an event that the control information is the beam indication information, processor 912 may obtain the on-off information configured in the beam indication information. In addition, processor 912 may determine whether to activate the repeater (e.g., repeater 120) for forwarding the signal to the UE (e.g., UE 130) or to the BS (e.g., BS 110) based on the on-off information.

In some implementations, processor 912 may obtain the power control information configured in the beam indication information. In addition, processor 912 may determine a specific beam for the signal based on a beam ID of the beam indication information and determine a transmission power of the signal based on the power control information.

In some implementations, the beam indication information may include a table configuring a plurality of beam IDs and a plurality of power control information during a plurality of slots.

In some implementations, the repeater (e.g., repeater 120) may be inactive before receiving the on-off information for activating the repeater (e.g., repeater 120). Alternatively, the repeater (e.g., 120) may be turned off in response of receiving an off command.

In some implementations, processor 912 may receive, via transceiver 916, the beam indication information periodically.

Under other proposed schemes in accordance with the present disclosure with respect to a transmission of at least one of beam indication information, on-off information and power control information in one control information for a repeater, processor 922 of apparatus 920, implemented in or as BS 110, may configure, via transceiver 926, a configuration indicating a control information to a repeater (e.g., repeater 120) of a wireless network. The control information may include at least one of beam indication information, on-off information and power control information. In addition, the control information may be used to determine an activation of forwarding a signal to a UE (e.g., UE 130) or to the BS (e.g., BS 110).

In some implementations, processor 922 may configure, via transceiver 926, an indication to the repeater (e.g., repeater 120) for indicating a slot offset and a duration of the activation of forwarding the signal to the UE (e.g., UE 130) or to the BS (e.g., BS 110).

In some implementations, in an event that the control information is the beam indication information, processor 922 may configure the on-off information in the beam indication information. In addition, processor 922 may transmit, via transceiver 926, the beam indication information to the repeater (e.g., repeater 120). The on-off information may be used to determine whether to activate for forwarding the signal to the UE (e.g., UE 130) or to the BS (e.g., BS 110).

In some implementations, processor 922 may configure the power control information in the beam indication information. In addition, processor 922 may transmit, via transceiver 926, the beam indication information to the repeater (e.g., repeater 120). A specific beam may be determined for the signal based on a beam ID of the beam indication information, and a transmission power may also be determined for the signal based on the power control information.

In some implementations, the beam indication information may include a table configuring a plurality of beam IDs and a plurality of power control information during a plurality of slots.

In some implementations, processor 922 may configure the beam indication information periodically.

### Illustrative Processes

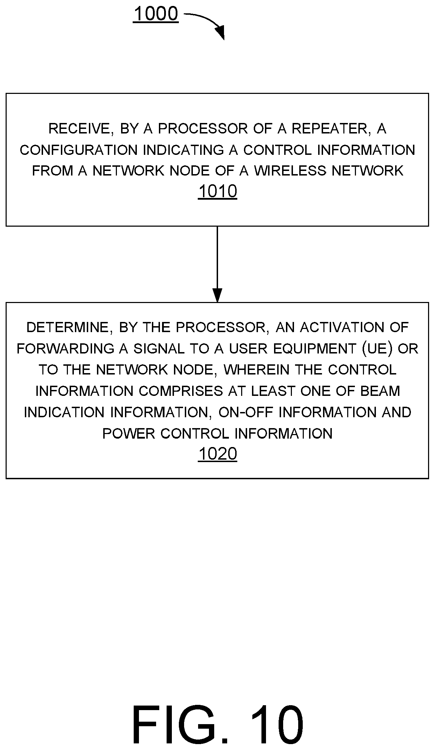

FIG. 10 illustrates an example process 1000 in accordance with an implementation of the present disclosure. Process 1000 may represent an aspect of implementing various proposed designs, concepts, schemes, systems and methods described above, whether partially or entirely, including those described above. More specifically, process 1000 may represent an aspect of the proposed concepts and schemes pertaining to a transmission of at least one of beam indication information, on-off information and power control information in one control information for a repeater. Process 1000 may include one or more operations, actions, or functions as illustrated by one or more of blocks 1010 and 1020. Although illustrated as discrete blocks, various blocks of process 1000 may be divided into additional blocks, combined into fewer blocks, or eliminated, depending on the desired implementation. Moreover, the blocks/sub-blocks of process 1000 may be executed in the order shown in FIG. 10 or, alternatively in a different order. Furthermore, one or more of the blocks/sub-blocks of process 1000 may be executed iteratively. Process 1000 may be implemented by or in apparatus 910 and apparatus 920 as well as any variations thereof. Solely for illustrative purposes and without limiting the scope, process 1000 is described below in the context of apparatus 910 as a repeater (e.g., repeater 120) and apparatus 920 as a communication entity such as a network node or base station (e.g., BS 110) of a network. Process 1000 may begin at block 1010.

At 1010, process 1000 may involve processor 912 of apparatus 910, implemented in or as repeater 120, receiving, via transceiver 916, a configuration indicating a control information from a network node (e.g., BS 110) of a wireless network. Process 1000 may proceed from 1010 to 1020.

At 1020, process 1000 may involve processor 912 determining an activation of forwarding a signal to a UE (e.g., UE 130) or to the BS (e.g., BS 110) based on the control information. The control information may include at least one of beam indication information, on-off information and power control information.

In some implementations, process 1000 may involve processor 912 receiving, via transceiver 916, an indication indicating a slot offset and a duration of the activation of forwarding the signal to the UE (e.g., UE 130) or to the BS (e.g., BS 110).

In some implementations, in an event that the control information is the beam indication information, process 1000 may further involve processor 912 obtaining the on-off information configured in the beam indication information. In addition, process 1000 may further involve processor 912 determining whether to activate the repeater (e.g., repeater 120) for forwarding the signal to the UE (e.g., UE 130) or to the BS (e.g., BS 110) based on the on-off information.

In some implementations, process 1000 may further involve processor 912 obtaining the power control information configured in the beam indication information. In addition, process 1000 may further involve processor 912 determining a specific beam for the signal based on a beam ID of the beam indication information. Also, process 1000 may further involve processor 912 determining a transmission power of the signal based on the power control information.

In some implementations, the beam indication information may include a table configuring a plurality of beam IDs and a plurality of power control information during a plurality of slots.

In some implementations, the repeater (e.g., repeater 120) may be inactive before receiving the on-off information for activating the repeater (e.g., repeater 120). Alternatively, the repeater (e.g., repeater 120) may be turned off in response of receiving an off command.

In some implementation, process 1000 may further involve processor 912 receiving, via transceiver 916, the beam indication information periodically.

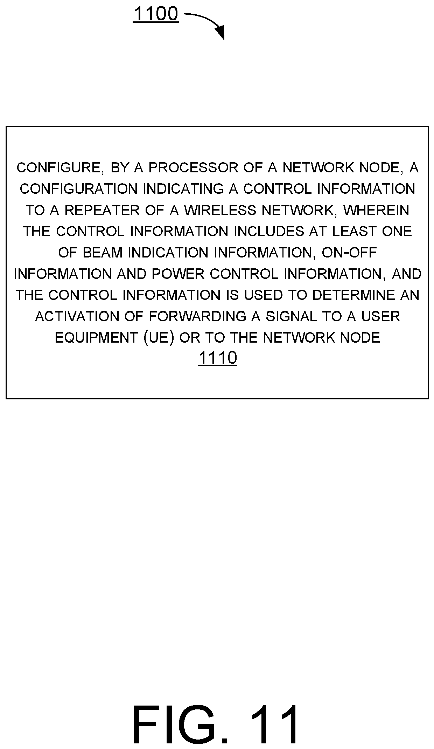

FIG. 11 illustrates another example process 1100 in accordance with an implementation of the present disclosure. Process 1100 may represent an aspect of implementing various proposed designs, concepts, schemes, systems and methods described above, whether partially or entirely, including those described above. More specifically, process 1100 may represent an aspect of the proposed concepts and schemes pertaining to a transmission of at least one of beam indication information, on-off information and power control information in one control information for a repeater. Process 1100 may include one or more operations, actions, or functions as illustrated by block 1110. Although illustrated as discrete blocks, various block of process 1100 may be divided into additional blocks, combined into fewer blocks, or eliminated, depending on the desired implementation. Moreover, the blocks/sub-blocks of process 1100 may be executed in the order shown in FIG. 11 or, alternatively in a different order. Furthermore, one or more of the blocks/sub-blocks of process 1100 may be executed iteratively. Process 1100 may be implemented by or in apparatus 910 and apparatus 920 as well as any variations thereof. Solely for illustrative purposes and without limiting the scope, process 1100 is described below in the context of apparatus 910 as a repeater (e.g., repeater 120) and apparatus 920 as a communication entity such as a network node or base station (e.g., BS 110) of a network. Process 1100 may begin at block 1110.

At 1110, process 1100 may involve processor 922 of apparatus 920, implemented in or as BS 110, configuring a configuration indicating a control information to a repeater (e.g., repeater 120) of a wireless network. The control information may include at least one of beam indication information, on-off information and power control information. Also, the control information may be used to determine an activation of forwarding a signal to a UE (e.g., UE 130) or to the BS (e.g., BS 110).

In some implementations, process 1100 may involve processor 922 configuring an indication to the repeater (e.g., repeater 120) for indicating a slot offset and a duration of the activation of forwarding the signal to the UE (e.g., UE 130) or to the BS (e.g., BS 110).

In some implementations, in an event that the control information is the beam indication information, process 1100 may further involve processor 922 configuring the on-off information in the beam indication information. In addition, process 1100 may further involve processor 922 transmitting, via transceiver 926, the beam indication information to the repeater (e.g., repeater 120). The on-off information may be used to determine whether to activate for forwarding the signal to the UE (e.g., UE 130) or to the BS (e.g., BS 110).

In some implementations, process 1100 may further involve processor 922 configuring the power control information in the beam indication information. In addition, process 1100 may further involve processor 922 transmitting, via transceiver 926, the beam indication information to the repeater (e.g., repeater 120). A specific beam may be determined for the signal based on a beam ID of the beam indication information, and a transmission power may be determined for the signal based on the power control information.

In some implementations, the beam indication information may include a table configuring a plurality of beam IDs and a plurality of power control information during a plurality of slots.

In some implementations, process 1100 may further involve processor 922 configuring the beam indication information periodically.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope of the present disclosure. Accordingly, the various implementations disclosed herein are not intended to be limiting, with the true scope being indicated by the following claims.

## Claims

1. A method (1000), comprising:
receiving (1010), by a processor (912) of a repeater (120), a configuration indicating a control information from a network node (110) of a wireless network (100); and
determining (1020), by the processor (912), an activation of forwarding a signal to a user equipment (130), UE, or to the network node (110) based on the control information,
wherein the control information comprises at least one of beam indication information, on-off information and power control information.

2. The method (1000) of Claim 1, further comprising:
receiving, by the processor (912), an indication indicating a slot offset and a duration of the activation of forwarding the signal to the UE (130) or to the network node (110).

3. The method (1000) of Claim 1, wherein in an event that the control information is the beam indication information, the method (1000) further comprises:
obtaining, by the processor (912), the on-off information configured in the beam indication information; and
determining, by the processor (912), whether to activate the repeater for forwarding the signal to the UE (130) or to the network node (110) based on the on-off information.

4. The method (1000) of Claim 3, further comprising:
obtaining, by the processor (912), the power control information configured in the beam indication information;
determining, by the processor (912), a specific beam for the signal based on a beam identification, ID, of the beam indication information; and
determining, by the processor (912), a transmission power of the signal based on the power control information.

5. The method (1000) of Claim 3, wherein the beam indication information comprises a table configuring a plurality of beam IDs and a plurality of power control information during a plurality of slots.

6. The method (1000) of Claim 3, wherein:
the repeater (120) is inactive before receiving the on-off information for activating the repeater (120), or
the repeater (120) is turned off in response of receiving an off command.

7. The method (1000) of Claim 3, further comprising:
receiving, by the processor (912), the beam indication information periodically.

8. An apparatus (910) implementable in a repeater (120), comprising:
a transceiver (916) configured to communicate wirelessly; and
a processor (912) coupled to the transceiver (916) and configured to perform operations comprising:
receiving, via the transceiver (916), a configuration indicating a control information from a network node (110) of a wireless network (100); and
determining an activation of forwarding a signal to a user equipment (130), UE, or to the network node (110) based on the control information,
wherein the control information comprises at least one of beam indication information, on-off information and power control information.

9. The apparatus (910) of Claim 8, wherein the processor (912) is further configured to perform operations comprising:
receiving, via the transceiver (916), an indication indicating a slot offset and a duration of the activation of forwarding the signal to the UE (130) or to the network node (110).

10. The apparatus (910) of Claim 8, wherein in an event that the control information is the beam indication information, the processor (912) is further configured to perform operations comprising:
obtaining the on-off information configured in the beam indication information; and
determining whether to activate the repeater (120) for forwarding the signal to the UE (130) or to the network node (110) based on the on-off information.

11. The apparatus (910) of Claim 10, wherein the processor is further configured to perform operations comprising:
obtaining the power control information configured in the beam indication information; and
determining a specific beam for the signal based on a beam identification, ID, of the beam indication information; and
determining a transmission power of the signal based on the power control information.

12. The apparatus (910) of Claim 10, wherein the beam indication information comprises a table configuring a plurality of beam IDs and a plurality of power control information during a plurality of slots.

13. The apparatus (910) of Claim 10, wherein:
the repeater (120) is inactive before receiving the on-off information for activating the repeater (120), or
the repeater (120) is turned off in response of receiving an off command.

14. The apparatus (910) of Claim 10, wherein the processor (912) is further configured to perform operations comprising:
receiving, via the transceiver (916), the beam indication information periodically.

15. A method (1100), comprising:
Configuring (1110), by a processor (922) of a network node (110), a configuration indicating a control information to a repeater (120) of a wireless network (100),
wherein the control information comprises at least one of beam indication information, on-off information and power control information, and
wherein the control information is used to determine an activation of forwarding a signal to a user equipment (130), UE, or to the network node (110).
